## Europäisches Patentamt
## European Patent Office
## Office européen des brevets

(11) Numéro de publication: **0 003 706**
**B1**

(12) **FASCICULE DE BREVET EUROPEEN**

(45) Date de publication du fascicule de brevet: **28.10.81**

(51) Int. Cl.³: **H 04 L 11/00**

(21) Numéro de dépôt: **79400080.2**

(22) Date de dépôt: **06.02.79**

(54) Système de transmission numérique multipoint à division du temps.

(30) Priorité: **07.02.78 FR 7803391**

(43) Date de publication de la demande:
**22.08.79 Bulletin 79/17**

(45) Mention de la délivrance du brevet:
**28.10.81 Bulletin 81/43**

(84) Etats Contractants Désignés:
**BE CH DE GB IT LU NL SE**

(73) Titulaire: **SOCIETE ANONYME DE TELECOMMUNICATIONS**
**41, rue Cantagrel**
**F-75624 Paris Cedex 13 (FR)**

(72) Inventeur: **Brouard, Germain Guy**
**11, allée La Fontaine**
**F-91410 Dourdan (FR)**
Inventeur: **Molleron, Claude Auguste**
**4, rue Antoine Petit**
**F-92260 Fontenay-aux-Roses (FR)**

(74) Mandataire: **Martinet, René et al,**
**Cabinet Martinet 62, rue des Mathurins**
**F-75008 Paris (FR)**

(56) Documents cités:
FR - A - 2 324 184
FR - A - 2 346 915

INTERNATIONAL SWITCHING SYMPOSIUM,
volume 2, 1976, 25—29 octobre 1976, Kyoto,
Japon, Tokyo,
M. CHIBA et al.: "A Commercial Test of Digital
Data Networks and its future survey", pages
441—1—1 à 1—6.

INTERNATIONAL SWITCHING SYMPOSIUM,
volume 2, 1976, 25—29 octobre 1976, Kyoto,
Japon, Tokyo
M. DAVANCENS et J.P. GUENIN: "An
Experimental Data Switching Exchange", pages
412—4—1 à 4—8.

TELETECHNIK, 1975, volume 19, no. 1—2,
Aarhus
A. SØGAARD: "New Automatic Multi-address
Telex Call Equipment in the Danish Telex
Network", pages 7 à 15.

THE BELL SYSTEM TECHNICAL JOURNAL,
volume 54, n.o. 5, mai-juin 1975
New York
N. SNOW et N. KNAPP: "Digital Data System",
SYSTEM OVERVIEW, pages 811 à 832.

Courier Press, Leamington Spa, England.

Système de transmission numérique multipoint à division du temps.

La présente invention concerne un système de transmission numérique multipoint à division du temps dans lequel chaque liaison multipoint associe un transcepteur principal de données et une pluralité de transcepteurs secondaires, afin que le transcepteur principal émet simultanément des mêmes données vers tous les transcepteurs secondaires pendant que l'un des transcepteurs secondaires communique des données vers le transcepteur principal. Les transcepteurs secondaires émettent successivement des données, chacun à leur tour, vers ls transcepteur principal.

Dans une liaison multipoint, plusieurs transcepteurs de données, également désignés sous le nom d'équipements terminaux de traitement de données (E.T.T.D.), sont reliés entre eux à travers un réseau de commutation de données et sont desservis par des lignes numériques dites de premier ordre ayant un même débit. Ce groupe de transcepteurs correspondant à une liaison multipoint comprend un transcepteur dit principal tandis que les autres sont dits secondaires. Le transcepteur principal émet des messages que sont chacun transmis vers tous les transcepteurs secondaires, et interroge, chacun à leur tour, les transcepteurs secondaires selon une procédure variable selon les applications. Par conséquent, tous les messages transmis par le transcepteur principal sont reçus par les transcepteurs secondaires. Par contre, seule la partie émettrice de l'un des transcepteurs secondaires est active à un instant donné pour transmettre des messages vers le transcepteur principal. En d'autres termes, les transcepteurs secondaires émettent un par un et un seul à la fois des messages vers le transcepteur principal. Cet échange de message de données est réalisé au moyen d'une unité multipoint et les différentes connexions entre les lignes numériques du premier ordre, transmettant les données principales et secondaires qui sont multiplexées, sont réalisées au moyen d'un répartiteur numérique.

Un système de transmission numérique multipoint correspondant au préambule de la revendication 1 est décrit, par exemple, dans la FR—A 2.346.915. Dans ce système, les données des transcepteurs sont transmises sous forme d'octets récurrents sur des lignes numériques bidirectionnelles de premiers débits différents mais multiples les uns des autres qui subissent un premier multiplexage en lignes numériques bidirectionnelles du second ordre ayant un second débit, à travers des premiers multiplexeurs-démultiplexeurs.

Pour fixer les idées, les premiers débits binaires sont par exemple de 0,8; 3,2; 6,4 et 12,8 kbit/s et le second débit binaire de 64 kbit/s. (cf. livre vert, Tome VIII.2, Avis X.50, pages 113 à 118 du Comité Consultatif International Téléphonique et Télégraphique (C.C.I.T.T.)). Par définition, la trame récurrente d'une ligne du second ordre résultant du multiplexage de lignes du premier ordre à débits différents doit contenir une fenêtre temporelle ou octet assigné à la ligne du premier ordre ayant le plus faible débit, ici égal à 0,8 kbit/s, afin que la trame contienne au moins un octet assigné à chacune des lignes du premier ordre. Par conséquent, la trame de la ligne du second ordre contient $64/0,8 = 80$ octets et donc les octets d'une ligne à 0,8 kbit/s apparaîtront dans la ligne du second ordre à 64 kbit/s de 80 en 80. De même, les octets appartenant à une ligne à 3,2; 6,4, resp. 12,8 kbit/s apparaissent dans la ligne du second ordre à 64 kbit/s de 20 en 20 $(20 = 64/3,2)$, de 10 en 10 $(10 = 64/6,4)$ ou de 5 en 5 $(5 = 64/12,8)$. Dans la trame de 80 octets, des octets en nombre égal à $80/80 = 1$; $80/20 = 4$; $80/10 = 8$; resp. $80/5 = 16$ sont donc assignés à une ligne au débit de 0,8; 3,2; 6,4; resp. 12,8 kbit/s. Ainsi, une ligne à 64 kbit/s peut résulter du multiplexage de a lignes composantes à 12,8 kbit/s, de b lignes composantes à 6,4 kbit/s, de c lignes composantes à 3,2 kbit/s et de d lignes composantes à 0,8 kbit/s selon la relation de combinaison suivante:

$$16a + 8b + 4c + d = 80$$

Conformément au document précité, une unité multipoint est reliée au répartiteur numérique par une ligne multiplex bidirectionnelle à 64 kbit/s d'une manière analogue à la connexion de chacun des premiers multiplexeurs-démultiplexeurs avec ledit répartiteur numérique. Les octets d'une communication point à point sont transférés directement de la ligne composante entrante à la ligne composante sortante tandis que les octets d'une communication multipoint traversent une première fois le répartiteur numérique qui les transmet vers l'unité multipoint qui les recopie en plusieurs octets identiques traversant une seconde fois le répartiteur numérique qui les dirige vers plusieurs lignes composantes sortantes convenables reliées aux trancepteurs de la liaison multipoint.

Le répartiteur numérique selon la FR—A 2.346.915 ou, plus précisément, le réseau de connexions de celui-ci peut être premier type décrit dans le FR—A 2.273.433 ou peut être également d'un second type décrit dans la FR—A 2.386.952. La principale différence entre ces deux types de répartiteurs numériques réside dans le fait que l'adresse de l'octet ou, plus précisément, la seconde partie d'adresse de l'octet — définie plus loin — est donnée par le numéro de la ligne du premier ordre parmi 80 dans une trame d'une ligne du second ordre.

selon le premier type, au lieu du numéro du canal parmi les cinq canaux d'une trame pouvant transmettre uniquement une ligne du premier ordre au débit élevé de 12,8 kbit/s et du numéro de l'octet dans ce canal selon le second type.

Ens se référant par exemple au répartiteur du premier type précité, celui-ci multiplexe 256 lignes du second ordre en huit jonctions internes multiplex parallèles à 2,048 Mbit/s sur lesquelles apparaissent les octets en parallèle.

Les octets des lignes composantes du premier ordre comportent chacun un bit de verrouillage. Ces bits de verrouillage forment une séquence pseudo-aléatoire et servent à calculer les addresses de l'octet dans la trame à 64 kbit/s afin que le répartiteur numérique effectue la première traversée précitée des octets d'une liaison multipoint vers l'unité multipoint. Au cours de la phase d'échange des octets dans l'unité multipoint qui les transmet vers le répartiteur numérique, celle-ci inscrit une autre séquence pseudo-aléatoire de bits de verrouillage dans les octets sortants afin que les premiers multiplexeurs - démultiplexeurs démultiplexent convenablement les lignes numériques du premier ordere sortant du répartiteur.

Ainsi, selon la FR—A 2.346.915, l'unité multipoint doit décoder les adresses transmises par les bits de verrouillage afin d'effectuer les commutations convenables, c'est-à-dire reconnaître les octets du premier ordre qui appartiennent à chaque liaison multipoint. D'autre part, chaque octet du premier ordre comporte, comme il este connu, un bit de signalisation qui sert à reconnaître, dans ce cas notamment, si un transcepteur secondaire est en phase d'émission ou non ou, plus précisément, à reconnaître le transcepteur secondaire d'une liaison multipoint que est en communication avec le transcepteur principal associé. Les adressages et reconnaissances présentent l'inconvénient d'une complexité de la structure logique de l'unité multipoint mais surtout engendrent une durée de transfert de chaque octet relativement longue.

Enfin, on notera que, les lignes numériques bidirectionnelles reliées à l'unité multipoint étant au débit de 64 kbit/s, et le plus grand commun diviseur des nombres d'octets 5, 10, 20 et 80, des lignes composantes aux débits du premier ordre apparaissant dans la trame de 80 octets à 64 kbit/s étant égal à 5, un octet principal ne peut apparaître que suivi d'un nombre maximal d'octets secondaires de la même liaison multipoint égal à 4. Cette condition limite le nombre de transcepteurs secondaires possible de chaque liaison multipoint à une valeur fixe. Par conséquent, un tel système de transmission numérique multipoint ne confère pas la souplesse d'exploitation requise pour adapter le nombre d'accès de l'unité multipoint au nombre effectif de transcepteurs qui s'y raccordent.

La présente invention telle qu'elle est caractérisée dans les revendications, a pour but de fournir un système de transmission numérique multipoint à division du temps s'affranchissant des inconvénients précités par le fait que les lignes du second ordre sont multiplexées en lignes numériques bidirectionnelles du troisième ordre à un troisième débit prédéterminé, ce qui permet de réaliser des liaisons multipoints ayant un nombre de transcepteurs secondaires supérieure à 4 et une durée de transfert des données relativement faible dans une unité multipoint. En outre, l'invention prévoit de relier plusieurs unités multipoints à chaque ligne numérique du troisième ordre ce qui augmente encore notablement le nombre de liaisons multipoints pouvant être réalisées.

A cette fin, un système de transmission numérique multipoint à division du temps selon le préambule de la revendication et est caractérisé en ce qu'il comprend des seconds multiplexeurs-démultiplexeurs dans lesquels les lignes numériques du second ordre subissent un second multiplexage les convertissant en lignes numériques bidirectionnelles de données du troisième ordre ayant un troisième débit prédéterminé, reliées audit réseau de connexions, et une pluralité d'unités multipoints, chacune des unités multipoints étant reliée à l'une desdites lignes du troisième ordre sur laquelle elle prélève un multiplex de débit égal à $(N+1)$ fois ledit second débit, où $N$ est égal au nombre maximal de trascepteurs secondaires communiquant avec un transcepteur principal d'une liaison multipoint réalisée par ladite unité multipoint, et les unités multipoints reliées à une même ligne du troisième ordre étant en nombre prédéterminé au plus égal à la différence du nombre de lignes du second ordre pouvant être multiplexées dans une ligne du troisième ordre et la somme des nombres maximaux des transcepteurs secondaires des liaisons multipoints réalisées par lesdites unités multipoints; et en ce que les mots de données principales et secondaires relatives à une unité multipoint sont multiplexés avec des mots de données de liaisons point à point et de liaisons multipoints réalisées par les autres unités multipoints reliés à ladite ligne du troisième ordre, en une multitrame de la ligne numérique du troisième ordre dans laquelle les mots de données principales relatives à l'unité multipoint sont assignés à des fenêtres temporelles ayant un emplacement prédéterminé et une fréquence récurrente égale à celles des mots dans les lignes du second ordre, chacune d'elles étant suivie de celles propres à contenir les $N$ mots de données secondaires de la liaison multipoint associée, ledit emplacement prédéterminé étant sélectionné par un signal d'adressage délivré par le second multiplexeur-démultiplexeur auquel est reliée ladite ligne du troisième ordre.

Avantageusement, puisque les fenêtres temporelles des données principales dans les multitrames audit troisième débit entrant et sortant dudit réseau de connexions ont des emplacements correspondants récurrents bien déterminés et sont chacun suivis des fenêtres temporelles allouées aux données secondaires de la liaison multipoint associée, chaque unité multipoint reçoit uniquement deux signaux d'adressage desdites fenêtres temporelles principales assignées aux multitrames entrante et sortante et un signal d'horloge à la cédence dudit troisième débit pour en déduire les N signaux d'adressage desdites fenêtres temporelles secondaires, c'est-à-dire celles assignées audit multiplex au débit de $(N+1)$ fois ledit second débit relié à l'unité multipoint et ce, sans faire appel aux bits de verrouillage des octets composants.

Conformément à l'invention, la sélection du transcepteur secondaire en communication avec le transcepteur principal n'est pas résolue par la détection des bits d'état des octets comme selon la FR—A 2.346.915, mais par la multiplication logique des octets secondaires succèdant à un octet principal d'une liaison multipoint, les autres transcepteurs secondaires n'émettant pas de données émettant alors des bits à l'état 1.

A cette fin, dans une unité multipoint conforme à l'invention, les moyens de transmission des mots de données identiques aux mots de données du transcepteur principal de chaque liaison multipoint comprennent en outre un registre dont la sortie est bouclée sur son entrée sous la commande desdits N signaux d'adressage des fenêtres temporelles secondaires de la multitrame entrante, et les moyens de transmission des mots de données identiques à ceux du transcepteur secondaire en communication avec le transcepteur principal comprennent en outre un registre dont la sortie est bouclée à travers une porte ET sur son entrée sous la commande du signal d'adressage des fenêtres temporelles principales de la multitrame sortante afin de réaliser la multiplication logique des mots de données secondaires.

Selon un exemple de réalisation auquel on se référera dans la suite, les lignes numériques du troisième ordre sont au débit de 1,024 Mbit/s, définissant une multitrame de 1280 octets provenant du multiplexage de seize lignes du second ordre à 64 kbit/s. Dans ce cas, il apparaît que, comparativement au système de transmission la FR—A 2.346.915, celui conforme à l'invention permet de réaliser des liaisons multipoints entre un transcepteur principal et, au plus, quinze transcepteurs secondaires, par exemple 7 de préférence. Avantageusement, les unités multipoints sont attribuées à des groupes de liaisons multipoints ayant des nombres N de transcepteurs secondaires déterminés mais différents afin de pouvoir connecter, par l'intermédiaire du répartiteur numérique et au gré de la demande, une unité multipoint ayant une liaison multipoint libre associée à un nombre N déterminé avec un transcepteur principal et N transcepteurs secondaires à relier entre eux.

D'autres caractéristiques et avantages de la présente invention apparaîtront plus clairement à la lecture de la description d'un exemple de réalisation qui suit et à l'examen des dessins annexés correspondants, dans lesquels:

— la Fig. 1 représente, sous la forme d'un diagramme de blocs, un système de transmission numérique multipoint à division du temps conforme à l'invention;

— la Fig. 2 représente, sous la forme d'un tableau, un exemple de multitrame d'une ligne numérique multiplex du troisième ordre sortant du réseau de connexion du répartiteur numérique; et

— la Fig. 3 représente, sous forme détaillée, une unité multipoint conforme à l'invention.

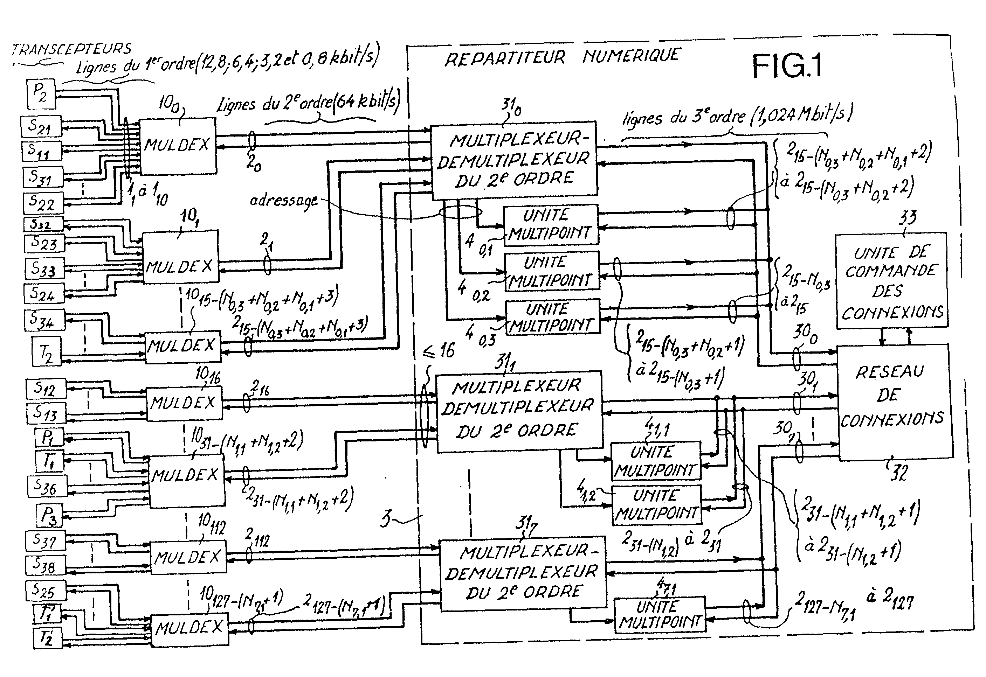

En se référant à la Fig. 1, un système de transmission numérique multipoint à division du temps conforme à l'invention réalise des liaisons multipoints comme, par exemple, entre les transcepteurs de données principales $P_1$, $P_2$ et $P_3$ et des transcepteurs de données secondaires $S_{11}$, $S_{12}$, $S_{13}$; $S_{21}$, $S_{22}$, $S_{23}$, $S_{24}$, $S_{25}$; $S_{31}$, $S_{32}$, $S_{34}$, $S_{35}$, $S_{36}$, $S_{37}$, $S_{38}$ respectivement, et des liaisons point à point entre des transcepteurs de données $T_1$ et $T_1'$, $T_2$ et $T_2'$ par exemple. Chaque transcepteur de données émet et reçoit par une ligne de transmission bidirectionnelle élémentaire du premier ordre $1_1$, $1_2$, $1_3$ ... un train numérique à l'un des débits élémentaires binaires 12,8; 6,4; 3,2 et 0,8 kbit/s. Chaque ligne de transmission élémentaire est reliée à l'un des multiplexeurs-démultiplexeurs du premier ordre $10_0$ à $10_{127}$ illustrés dans la Fig. 1 et appelés dans la suite "muldex". Ces muldex sont reliés au répartiteur numérique 3 par des lignes multiplex bidirectionnelles du second ordre $2_0$ à $2_{127}$ qui sont, par exemple, deux jonctions du types "J3" ou "J64" transmettant chacune selon lesens d'émission, resp. de reception un premier signal de données à 64 kbit/s, un second signal à une fréquence d'horloge à 64 kHz et un troisième signal à une fréquence d'octet à 8 kHz (cf. Article de Jean-Marie GAUTHIER et al, Cables & Transmission, Octobre 1978, No 4, pages 447a—460; et livre vert, Tome III—2, Avis G. 703, pages 387—407 du C.C.I.T.T.) Les nombres de ces muldex 10, resp. de ces lignes 2 utilisés peuvent être, en fait, inférieurs à 128 afin de connecter des unités multipoints a des lignes du troisième ordre, comme il sera expliqué dans la suite.

Chaque muldex 10 possède un nombre d'étages de multiplexage et de démultiplexage appropriés aux débits des lignes bidirectionnelles élémentaires 1 auxquelles il est connecté. Ainsi, par exemple, le muldex $10_0$ possède un étage de multiplexage des lignes $1_0$ à $1_3$ au débit de 0,8 kbit/s, un étage de

multiplexage des lignes $1_4$ à $1_6$ au débit de 3,2 kbit/s et un étage de multiplexage des lignes $1_7$ à $1_{10}$ au débit de 12,8 kbit/s.

D'autre part, chaque liaison multipoint est réalisée par l'intermédiaire d'un nombre donné de muldex 10 et du répartiteur numérique 3. Par exemple, la liaison multipoint entre le transcepteur principal $P_2$ et les transcepteurs secondaires $S_{21}$ à $S_{25}$ est effectuée par l'intermédiaire de trois muldex $10_0$, $10_1$ et $10_{127} - (N_{7,1}+1)$ et du répartiteur numérique 3.

Dans le répartiteur numérique 3, chaque groupe de 16 lignes multiplex du second ordre $2_0$ à $2_{15} \ldots 2_{112}$ à $2_{127}$ est relié à une ligne multiplex bidirectionnelle du troisième ordre $30_0$ à $30_7$ au débit de 1,024 Mbit/s par l'intermédiaire d'un multiplexeur-démultiplexeur du second ordre $31_0$ à $31_7$. Les lignes multiplex $30_0$ à $30_7$ du troisième ordre sont reliées au réseau de connexions 32 du répartiteur 3.

Le réseau de connexions 32 est du type cité dans l'entrée en matière, mais assure des connexions permanentes entre les canaux des lignes multiplex à 1,024 Mbit/s par l'intermédiaire d'une ligne multiplex interne à huit jonctions parallèles à 1,024 Mbit/s. Ces connexions permanentes sont en fait programmées au moyen d'une de commande 33 au gré de l'opérateur, selon les différentes liaisons multipoints et point à point à réaliser. Le réseau de connexions 32 reçoit les trames des lignes multiplex à 64 kbit/s des multitrames des lignes multiplex à 1,024 Mbit/s et transfère, selon le programme souhaité par l'opérateur, les octets des lignes élémentaires qui proviennent des transcepteurs de données P et S à des emplacements déterminés d'octets des canaux d'émission des lignes multiplex $30_0$ à $30_7$ en vue de leurs échanges dans les unités multipoints $4_0$ à $4_7$. Puis, après ces échanges, les réseau de connexions 32 insère comme premier bit d'octet, des bits d'une séquence pseudo-aléatoire de verrouillage en vue de leur décodage à la réception dans les muldex 10.

Comme montré à la Fig. 1, chaque multiplexeur-démultiplexeur $31_i$ (i variant de 0 à 7) peut être relié à une ou J unités multipoints $4_{i,j}$ (j variant de 1 à J) par l'intermédiaire de la ligne multiplex du troisième ordre associée $30_i$. Chaque unité multipoint prélève un nombre $(N_{i,j}+1)$ de canaux du second ordre à 64 kbit/s équivalents à une ligne multiplex au débit de $(N_{i,j}+1) \times 64$ kbit/s. Le nombre $N_{i,j}$ est égal au nombre maximal de transcepteurs secondaires S que l'unité multipoint $4_{i,j}$ pour relier à un transcepteur principal P. Pour chaque groupe d'unités multipoints $4_{i,j}$ défini par un indice commun i, les nombres $N_{i,j}$ et le nombre J d'unités multipoints reliées à la ligne multiplex du troisième ordre $30_i$ peuvent être modifiés au moyen de l'unité de commande 33 et par des réglages d'exploitation, comme des connexions soudées, dans les unités multipoints, et ce au gré de la demande. La somme des nombres $(N_{i,j}+1)$ pour i donné, est par conséquent toujours inférieure ou égale à 1024/64 = 16 et, de manière générale, le nombre $N_{i,j}$ est compris entre 2 et 15 suivant les besoins d'exploitation.

Selon l'exemple illustré à la Fig. 1, on a supposé que la ligne multiplex $30_0$ était reliée à trois unités multipoints $4_{0,1}$, $4_{0,2}$ et $4_{0,3}$, la ligne $30_1$ à deux unités multipoints $4_{1,1}$ et $4_{1,2}$, et la ligne $30_7$ à une unique unité multipoint $4_{7,1}$ permettant des liaisons multipoints respectives d'au plus $N_{0,1}$, $N_{0,2}$ et $N_{0,3}$, $N_{1,1}$ et $N_{1,2}$ et $N_{7,1}$ transcepteurs secondaires. Dans ce cas, on a:

$$4 \leqslant N_{0,1} + N_{0,2} + N_{0,3} \leqslant 13$$

$$3 \leqslant N_{1,1} + N_{1,2} \leqslant 14 \text{ et}$$

$$2 \leqslant N_{7,1} \leqslant 15$$

et les multiplexeurs-démultiplexeurs $31_0$, $31_1$ et $31_7$ sont reliés à des lignes multiplex du second ordre 2 aux nombres respectifs de $(16 - (N_{0,3} + N_{0,2} + N_{0,1} + 3))$, $(16 - (N_{1,1} + N_{1,2} + 2))$ et $(16 - (N_{7,1} + 1))$. De manière générale, un multiplexeur-démultiplexeur $31_i$ interconnecté à J unités multipoints est relié à

$$(16 - (\sum_{j=1}^{J} N_{i,j} + J))$$

lignes multiplex du second ordre en exploitation.

Le réseau de connexions 32 transmet à chaque unité multipoint $4_{i,j}$ par l'intermédiaire de la ligne du troisième ordre $30_i$ les groupes d'octets en série de chaque liaison multipoint qu'elle réalise. L'octet des données d'un transcepteur principal a un emplacement, dans un groupe de 16 canaux multiplexés du second ordre de la multitrame de la ligne $30_i$ associée, déterminé par l'emplacement physique de l'unité multipoint parmi les modules de raccordement aux lignes multiplex du second ordre associées ou jonctions du type "J3". On a supposé, selon l'exemple montré à la Fig. 1, que les modules de raccordement associés aux canaux des lignes multiplex du second ordre 2 connectées à un multiplexeur-démultiplexeur 31 sont associés aux premiers canaux du groupe de 16 canaux multiplexés dans une ligne du troisième ordre 30, tandis que les derniers de ce groupe de canaux sont associés aux unités multipoints respectives.

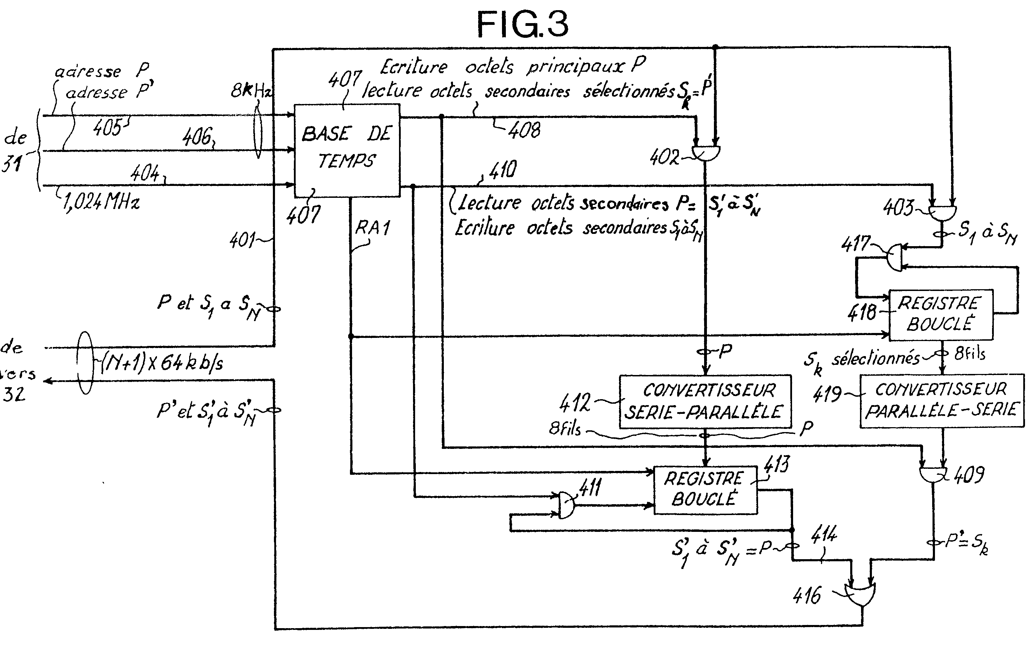

Ainsi, parmi les $16 \times 80 = 1280$ fenêtres temporelles de la multitrame d'une ligne $30_i$ à 1,024 Mbit/s, chaque groupe de $(N_{i,j}+1)$ octets représente une liaison multipoint et est inséré en série dans $(N_{i,j}+1)$ fenêtres temporelles récurrentes. Chacun des canaux d'une ligne multiplex à $(N_{i,j}+1) \times 64$ kbit/s reliée à une unité' multipoint $4_{i,j}$ est toujours associé à la transmission des données, soit d'un transcepteur principal P, soit d'un transcepteur secondaire de même rang 1 à $N_{i,j}+1$. Dans ce cas, contrairement aux unités multipoints décrites dans la FR—A 2.346.915, dans lesquelles il est nécessaire de décoder les adresses des octets des transcepteurs principaux et secondaires codées selon les séquences pseudo-aléatoires des bits de verrouillage, chaque unité multipoint $4_{i,j}$ conforme à l'invention ne comprend pas un calculateur d'adresses mais reçoit, entre autres deux signaux P, P' délivrés par le multiplexeur-démultiplexeur $31_i$ pour adresser les octets des transcepteurs principaux dans les multitrames entrante et sortante, comme il sera expliqué, dans la suite, en référence a la Fig. 3.

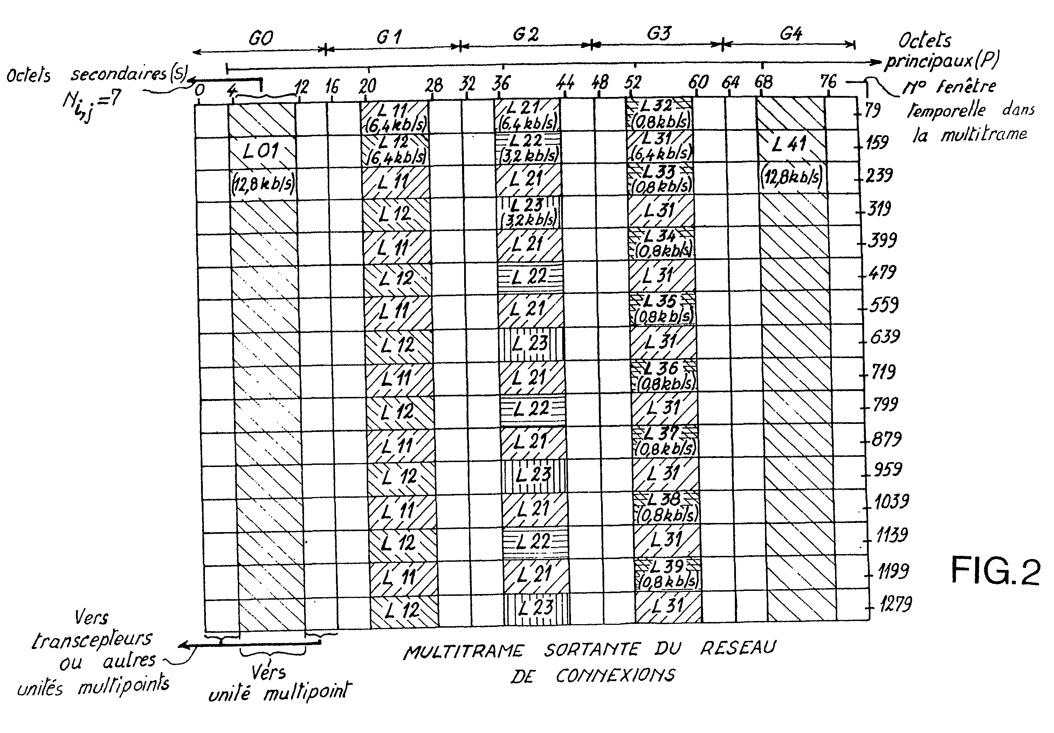

En se référant à la Fig. 2, on a représenté, sous la forme d'un tableau, la multitrame d'une ligne du troisième ordre $30_i$ à 1,024 Mbit/s qui sort du réseau de connexions 32 et dont les emplacements des fenêtres temporelles hachurés sont ceux des octets de données transmis vers une unité multipoint associée $4_{i,j}$.

Dans ce tableau, on a réparti la multitrame sous forme de cinq groupes G0 à G4 disposés en colonnes et comprenant chacun 16 sous-groupes qui sont constitués chacun de 16 fenêtres temporelles successives. Les fenêtres temporelles des 5 trames à 64 kbit/s correspondent chacune à une trame (ou groupe) analogue à celle définie dans la FR—A 2.346.915.

Chaque sous-groupe de 16 fenêtres temporelles est associé aux 16 "lignes" multiplex 2 associées au multiplexeur-démultiplexeur $31_i$. On a supposé que l'emplacement déterminé de la fenêtre temporelle associée aux octets de données principales (P) est à l'emplacement 4 de chaque sous-groupe, c'est-à-dire aux fenêtres temporelles N° 4, 20, 36 ... 1268 de la multitrame, et que les fenêtres temporelles associées aux octets de données secondaire (S), qui suivent immédiatement chaque fenêtre temporelle principale (P), sont au nombre de $N_{i,j} = 7$. Les autres fenêtres temporelles qui ne sont pas hachurées sur la Fig. 2 sont affectées aux octets de données des liaisons multipoints et point à point transmis vers les transcepteurs et éventuellement ver les autres unités multipoints $4_{i,j}$ associées, comme il a été dit précédemment.

On a supposé également que les groupes G0 et G4 étaient associés chacun à une liaison multipoint L01, L41 à 12,8 kbit/s, le groupe G1 à deux liaisons multipoints L11 et L12 à 6,4 kbit/s, le groupe G2 à une liaison multipoint L21 à 6,4 kbit/s et à deux liaisons multipoints L22 et L23 à 3,2 kbit/s et le groupe G3 à une liaison multipoint L31 à 6,4 kbit/s et à huit liaisons multipoints L32 à L39 à 0,8 kbit/s. Ainsi, dans une ligne multiplex à 1,024 Mbit/s, les canaux des lignes à 12,8 kbit/s, 6,4 kbit/s, 3,2 kbit/s et 0,8 kbit/s apparaissent respectivement de 80 et 80, de 160 en 160, de 320 en 320 et de 1280 en 1280. On notera qu'on n'a pas représenté sur la Fig. 2 explicitement les octets des données secondaires de chaque sous-groupe mais qu'il suffira de concevoir d'après ce qui précède que le nombre d'octets secondaires des sous-groupes affectés à une liaison multipoint est toujours au plus égal à 15 et peut être différent de celui des sous-groupes affectés à une liaison multipoint du même group ou d'un groupe différent.

On remarquera que, contrairement à la structure de multitrame au débit de 64 kbit/s décrite dans la FR—A 2.346.915, une multitrame à 1,024 Mbit/s permet des liaisons multipoints avec un nombre de transcepteurs secondaires nettement supérieur à 4, c'est-à-dire réglable entre 2 et 15, mais également un nombre de liaisons multipoints à débit donné supérieur à celui maximal réalisé selon l'art antérieur. Ainsi, une unité multipoint de l'art antérieur ne pouvait assurer qu'une liaison multipoint à 12,8 kbit/s, ou deux à 6,4 kbit/s ou quatre à 3,2 kbit/s, ... tandis que l'unité multipoint conforme à l'invention assure simultanament cinq liaisons multipoints at 12,8 kbit/s, ou dix à 6,4 kbit/s, ou vingt à 3,2 kbit/s, ... et ce, avec un grand nombre de transcepteurs secondaires. Ainsi, le système de transmission numérique multipoint conforme à l'invention est mieux adapté aux différentes variantes de liaisons multipoints car il est beaucoup plus souple d'exploitation par le fait qu'un nombre élevé et variable de transcepteurs secondaires peut être relié à un transcepteur principal avec un temps de transit dans l'unité multipoint et le répartiteur numérique inférieurs à ceux du système de l'art antérieur.

On n'a pas représenté sur le dessin la structure de la multitrame entrante dans le réseau de connexions 32 après les échanges des octets de données principales et secondaires effectués dans l'unité multipoint. Ces échanges s'effectuent de manière analogue à ceux décrits dans la FR—A 2.346.915 pour chaque groupe de $(N_{i,j}+1)$ octets. L'octet principal de la multitrame sortante est recopié et transféré dans toutes les fentes temporelles affectées aux octets secondaires de la multitrame entrante, et l'un des octets secondaires correspondant au transcepteur secondaire émettant, c'est-à-dire étant le seul à ne pas présenter tous ses bits à l'état 1, est recopié et transféré dans la fente temporelle affectée aux octets principaux de la multitrame entrante.

En se référant maintenant à la Fig. 3, une unité multipoint 4 conforme à l'invention reçoit à l'entrée le multiplex à $(N+1) \times 64$ kbit/s de la ligne du troisième ordre associée 30 sur le fil 401. Les octets en série des $(N+1)$ "lignes" multiplex à 64 kbit/s, c'est-à-dire l'octet principal P et les N octets secondaires $S_1$ à $S_N$ de chaque sous-groupe de 16 fenêtres temporelles sont dirigés vers deux portes ET 402 et 403.

Comme déjà dit, chaque unité multipoint est associée à un nombre N caractérisant le nombre maximal de transcepteurs secondaires des liaisons multipoints qu'elle réalise, afin d'éviter, dans la mesure du possible, lors de l'exploitation du système de transmission numérique multipoint, la présence de canaux numériques libres d'information. A cet égard, au gré de la demande, l'opérateur assignera une liaison multipoint d'un nombre N de transcepteurs secondaires chaque fois qu'une unité multipoint, réalisant une telle liaison et propre au débit de cette liaison, est disponible.

D'autre part, comme précité dans l'entrée en matière, lorsqu'un transcepteur secondaire n'émet pas ou n'est pas sélectionné, tous les bits de ses octets qu'il transmet sont à l'état 1. Ceci permet avantageusement, au moyen d'un registre bouclé sur lui-même, à travers une porte ET recevant les octets secondaires successifs, de réaliser la multiplication logique bit à bit des informations contenues dans les octets $S_1$ à $S_N$ des transcepteurs secondaires pour chaque liaison multipoint, afin d'obtenir les octets du transcepteur sélectionné secondaire, par exemple $S_k$ (avec $1 \leqslant k \leqslant N$) sans faire appel à l'état des bits de signalisation. Egalement, les bits de verrouillage des octets ne sont pas utilisés pour déduire les adresses des octets, puisque chaque octet de transcepteur principal est assigné toujours à la même fenêtre temporelle de la multitrame sortante à 1,024 Mbit/s, c'est-à-dire à une fenêtre temporelle déterminée du sous-groupe de 16 fenêtres correspondant aux 16 multiplex à 64 kbit/s de la ligne du troisième ordre associée 30.

Par conséquent, chaque unité multipoint reçoit du multiplexeur-démultiplexeur du second ordre 31 associé un signal d'horloge à 1,024 MHz sur le fil 404 et les deux signaux d'adresses des octets principaux P, P'- mentionnés plus haut — à la fréquence recurrente de 8 kHz sur les fils 405 et 406. Ces deux derniers signaux correspondent, selon l'exemple considéré à la Fig. 2, à l'écriture et à la lecture des données des fenêtres sortante et entrante, toujours relativement au réseau de connexions 32. Ces signaux sont reçus par une base de temps 407 synchronisée à la fréquence de 1,024 MHz qui transmet sur le fil 408 le signal d'adressage récurrent des fenêtres temporelles principales 4, 20, 36, 52, ... par exemple, vers deux portes ET 402 et 409 et, sur le fil 410, les signaux d'adressage récurrents des N fenêtres temporelles secondaires (N=7) : 5 à 5+N—1, 21 à 21+N—1, 37 à 37+N—1, 53 à 53+N—1, ... par exemple, vers deux portes ET 403 et 411.

Les octets P des transcepteurs principaux, transmis par la ligne de sortie du réseau de connexions 32 à (N+1) × 64 kbit/s sont écrits à travers la porte ET 402 vers un convertisseur série-parallèle 412 qui joue le rôle de registre-tampon et effectue une conversion série-parallèle. Le bus de sortie à 8 fils du convertisseeur 412 est relié à un registre 413 bouclé sur lui-même à travers la porte ET 411. Par conséquent, au cours de la durée d'un sous-groupe de N fenêtres temporelles successives assignées aux octets secondaires $S_1$ à $S_N$, un octet principal d'une liaison multipoint est inséré dans le registre 413 et transmis, via le fil 414, dans les fenêtres temporelles secondaires $S_1'$ à $S_N'$ correspondantes de la multitrame (P',S') entrant dans le réseau de connexions 32, et vers la ligne d'entrée du réseau de connexions au débit de (N+1) × 64 kbit/s, à travers une porte OU 416.

Pendant les intervalles de temps successifs des fenêtres temporelles assignées aux données secondaires, les octets secondaires $S_1$ à $S_N$ de la multitrame sortant (P,S) du réseau de connexions 32 sont écrits en série à travers la porte 403 et une porte ET 417, cette dernière étant insérée dans la boucle d'un registre 418. Ce registre 418 ainsi que le registre 413 sont remis à l'état 1 (signal RA1) avant toute transmission d'un sous-groupe d'octets $S_1$ à $S_N$ d'une liaison multipoint, c'est-à-dire avant l'émission du signal d'adressage des fenêtres temporelles principales sur le fil 408 par exemple. Ceci permet de mémoriser le résultat de la multiplication logique des octets secondaires $S_1$ à $S_N$ d'une liaison multipoint à la fin de l'émission du signal d'adressage des fenêtres temporelles secondaires sur le fil 410 et, corollairement, de mémoriser les données du transcepteur secondaire sélectionné $S_k$ d'une liaison multipoint.

L'octet secondaire sélectionné $S_k$ est ensuite transmis à un convertisseur parallèle-série 419 qui joue le rôle de registre-tampon et effectue la conversion parallèle-série de l'octet parallèle $S_k$ transmis par le registre 418. Sous la commande du signal d'adressage des fenêtres temporelles principales transmis sur le fil 408, l'octet $S_k$ est lu à la sortie du convertisseur 419 à travers la porte ET 409 qui reçoit le signal d'adressage en lecture sur le fil 408. La sortie de la porte ET 409 est reliée à l'autre entrée de la porte OU 416. Ainsi, la ligne multiplex d'entrée du réseau de connexions 32 à (N+1) × 64 kbit/s, reliée à la sortie de la porte OU 416, transmet la multitrame entrante (P',S') à 1,024 Nbit/s dans laquelle les octets $S_k$ des transcepteurs secondaires sélectionnés ont été recopiés dans les fenêtres temporelles affectées aux octets principaux respectifs P', en supposant toujours que les transcepteurs secondaires d'une liaison multipoint n'émettent qu'un seul à la fois, et dans laquelle les octets P des transcepteurs principaux ont été recopiés dans les fenêtres temporelles effectées aux sous-groupes d'octets secondaires $S_1'$ à $S_N'$ respectifs des liaisons multipoints.

Bien que l'invention ait été décrite d'après un exemple de réalisation, il reste entendu que son domaine n'est limité que par les revendications formulées ci-après. Notamment, le nombre de bits des caractères ou mots et les débits des différentes lignes élémentaires et multiplex ne sont pas restreints aux valeurs numériques susmentionnées.

## Revendications

1. Système de transmission numérique multipoint à division du temps dans lequel chaque liaison multipoint associe un transcepteur principal de données (P) et une pluralité de transcepteurs secondaires de données (S), le transcepteur principal (P) émettant simultanément des mêmes données vers les transcepteurs secondaires (S) et les transcepteurs secondaires (S) communiquant des données, chacun à son tour, vers le transcepteur principal de données, les autres transcepteurs secondaires restant inactifs en émission, ledit système comprenant:
— des premiers multiplexeurs-démultiplexeurs (10) dans lesquels des lignes numériques bidirectionnelles du premier ordre (1) transmettant les mots de données des transcepteurs principaux (P) et secondaires (S) et ayant des premiers débits différents mais multiples les uns des autres subissent un premier multiplexage les convertissant en lignes multiplex numériques bidirectionnelles de données du second ordre (2) ayant un second débit prédéterminé, les bits d'un rang donné des mots récurrents de la trame d'une ligne multiplex du second ordre (2) formant une séquence pseudo-aléatoire pour l'addressage des lignes numériques du premier ordres (1);
— un répartiteur numérique (3) comprenant un réseau de connexions (32) propre à transférer les mots de données principales et secondaires d'une ligne numérique du premier ordre d'une ligne numérique entrante du second ordre dans des fenêtres temporelles prédéterminées de lignes numériques sortantes du second ordre;
— une unité multipoint (4) comprenant des moyens pour séparer les mots de données de transcepteurs principaux (P) at secondaires (S) transmis par ledit répartiteur numérique et réalisant entre eux un nombre déterminé de liaisons multipoints, des moyens pour transmettre vers chaque transcepteur principal (P), à travers ledit réseau de connexions (32), des mots de données (P') identiques aux mots de données du transcepteur secondaire ($S_k$) en communication avec le transcepteur principal (P) et des moyens pour transmettre vers cheque transcepteur secondaire (S) à travers ledit réseau de connexions (32) des mots de données (S') identiques aux mots de données du transcepteur principal (P); caractérisé en ce qu'il comprend des second multiplexeurs-démultiplexeurs (31) dans lesquels les lignes numériques du second ordre (2) subissent un second multiplexage les convertissant en lignes numériques bidirectionnelles de données du troisième ordre (30) ayant un troisième débit prédéterminé, reliées audit réseau de connexions (32), et une pluralité d'unités multipoints (4), chacune des unités multipoints étant reliée à l'une desdites lignes du troisième ordre (30) sur laquelle elle prélève un multiplex de débit égal à (N+1) fois ledit second débit, où N est égal au nombre maximal de transcepteurs secondaires communiquant avec un transcepteur principal d'une liaison multipoint réalisée par ladite unité multipoint, et les unités multipoints ($4_{i,j}$) reliées à une même ligne du troisième ordre ($30_i$) étant en nombre prédéterminé (J) au plus égal à la différence du nombre de lignes du second ordre (2) pouvant être multiplexées dans une ligne du troisième ordre et la somme des nombres maximaux

$$( \sum_{j=1}^{J} N_{i,j})$$

des transcepteurs secondaires des liaisons multipoints réalisées par lesdites unités multipoints ($4_{i,j}$); et en ce que les mots de données principales et secondaires relatives à une unité multipoint ($4_{i,j}$) sont multiplexés avec des mots de données de liaisons point à point et de liaisons multipoints réalisées par les autres unités multipoints reliées à ladite ligne du troisème ordre ($30_i$), en une multitrame de la ligne numérique du troisième ordre dans laquelle les mots de données principales relatives à l'unité multipoint sont assignés à des fenêtres temporelles (P,P') ayant un emplacement prédéterminé et une fréquence récurrente égale à celles des mots dans les lignes du second ordre (2), chacune d'elles étant suivie de celles propres à contenir les N mots de données secondaires de la liaison multipoint associée, ledit emplacement prédéterminé étant sélectionné par un signal d'adressage (405, 406) délivré par le second multiplexeur-démultiplexeur ($31_i$) auquel est reliée ladite ligne du troisième ordre ($30_i$).

2. Système de transmission numérique multipoint conforme à la revendication 1, caractérisé en ce que les moyens pour séparer les mots de données des transcepteurs principaux (P) et secondaires (S) transmis par un multiplex à (N+1) fois ledit second débit consistent en une base de temps (407) recevant du second multiplexeur-démultiplexeur (31) associé un signal d'horloge (404) à la cadence dudit troisième débit et deux signaux d'adressage (406, 405) des fenêtres temporelles principales auxdits emplacements prédéterminés dans les multitrames audit troisème débit entrant et sortant dudit réseau de connexions (32), et déduisant desdits deux signaux d'adressage (406, 405) les N signaux d'adressage (410) des fenêtres temporelles assignées aux mots de données secondaires succédant chaque mot de données principales dans lesdites multitrames entrante et sortante.

3. Système de transmission numérique multipoint conforme à la revendication 1 ou 2, caractérisé en ce que, lorsqu'un transcepteur secondaire (S) n'émet pas de données, il émet des bits à l'état 1.

4. Système de transmission numérique multipoint conforme aux revendications 2 et 3, caractérisé en ce que les moyens pour transmettre vers chaque transcepteur principal des mots (P') identiques aux mots de données du transcepteur secondaire ($S_k$) en communication avec le transcepteur principal (P) comprennent, en outre, un registre (418) dans lequel l'écriture des N mots de données secondaires successifs (S) sous la commande des signaux d'adressage (410) des fenêtres temporelles secondaires de la multitrame sortante est réalisée par bouclage à travers une porte ET (417) afin d'obtenir par la multiplication logique es N mots de données secondaires le mot de données du transcepteur secondaire en communication ($S_k$) et dans lequel la lecture des mots de données du transcepteur secondaire ($S_k$) en communication est réalisée à travers un convertisseur parallèle-série (419) sous la commande du signal d'adressage (408) des fenêtres temporelles principales de la multitrame entrante, et en ce que les moyens pour transmettre vers chaque transcepteur secondaire (S) des mots de données (S') identiques aux mots de données du transcepteur principal (P) comprennent, en outre, un registre (413) dans lequel l'écriture des mots de données principals (P) est réalisée à travers un convertisseur série parallèle (412) sous la commande des fenêtres temporelles principales de la multitrame sortante et dans lequel la lecture des mots de données secondaires (S') est réalisée par bouclage sous la commande des signaux d'adressage (410) des fenêtres temporelles secondaires de la multitrame entrante.

5. Système de transmission numérique multipoint conforme à l'une des revendications 1 à 4, caractérisé en ce que les nombres maximaux N de transcepteurs secondaires (S) des liaisons multipoints réalisés par les unités multipoints (4) peuvent être différents et en ce que ledit répartiteur numérique (32—33) comprend des moyens de connecter chaque liaison multipoint à N transcepteurs secondaires à une unité multipoint (4) réalisant des liaisons multipoints à au moins N transcepteurs secondaires.

6. Système de transmission numérique multipoint conforme à l'une des revendications 1 à 5, caractérisé en ce que ledit nombre N est inférieur ou égal à 15.

## Claims

1. Time-division multipoint digital transmission system in which each multipoint communication associates a main data transceiver (P) with a plurality of secondary data transceivers (S), the main transceivers (P) emitting simultaneously the same data to the secondary transceivers (S) and the secondary transceivers (S) each, in turn, communicating data to the main transceiver, the other secondary transceiver staying inoperative for emitting, said system comprising:

— first multiplexers-demultiplexers (10) in which first-order bidirectional digital data links (1) transmitting data words from the main (P) and secondary (S) transceivers and having first rates which are different from, but multiples of, one another, are given a first multiplexing converting them into second-order bidirectional digital data links (2) having a second predetermined rate, the bits which have a given rank in recurrent words of the frame of a second-order multiplex link (2), forming a pseudo-random sequence for addressing the first-order digital links (1);

— a digital frame (3) comprising a connection network (32) for transferring the main and secondary data words of a first-order digital link in an incoming second-order digital link into predetermined time slots of outgoing second-order digital links;

— a multipoint unit (4) comprising means for separating the data words of the main (P) and secondary (S) transceivers which are transmitted from said digital frame and which form a predetermined number of multipoint communications therebetween, means for transmitting to each main transceiver (P) through said connection network (32) data words (P') identical to the data words of the secondary transceiver ($S_k$) in communication with the main transceiver (P) and means for transmitting to each secondary transceiver (S) through said connection network (32) data words (S') identical to the data words of the main transceiver (P);

characterized in that it comprises second multiplexers-demultiplexers (31) in which the second-order digital links (2) are given a second multiplexing converting them into third-order bidirectional digital links (30) having a third predetermined rate and connected to said connection network (32), and plurality of multipoint units (4), each of the multipoint units being connected to one of said third-order links (30) on which it is taking a multiplex having a rate equal to (N + 1) times said second rate, when N is equal to the maximum number of secondary transceivers communicating with a main transceiver of a multipoint communication formed by said multipoint unit, and the multipoint units ($4_{i,j}$) connected to a same third-order link ($30_i$) being being in predetermined number (J) at most equal to the difference between the number of second-order links (2) to be multiplexed into a third-order link and the sum of the maximum numbers

$$\left( \sum_{j=1}^{J} N_{i,j} \right)$$

of the secondary transceivers of the multipoint communications formed by said multipoint units ($4_{i,j}$); and that the main and secondary data words relative to a multipoint unit ($4_{i,j}$) are multiplexed with data words of point-to-point communications and multipoint communications formed by the other multipoint units which are connected to said third-order link (30₁), into a multiframe of the third-order digital link in which the main data words relative to the multipoint unit are assigned to time slots (P, P') having a predetermined position and a recurrent frequency equal to one of the words in the second-order links (2), each of these time slots being followed by the time slots for containing the N secondary data words of the associated communication multipoint, said predetermined position being selected by means of an addressing signal (405, 406) delivered from the second multiplexer-demultiplexer (31₁) to which is connected said third-order link (30₁).

2. Multipoint digital transmission system according to claim 1 characterized in that the means for separating the data words of the main (P) and secondary (S) transceivers which are transmitted on a multiplex having (N + 1) times said second rate, consists of a time base (407) which receives from the second associated multiplexer-demultiplexer (31) a clock signal (404) having the frequency of said third rate and two signals (406, 495) for addressing the main time slots into said predetermined positions in the incoming and outgoing third rate multiframe from said connection network (32) and which produces from said two addressing signals (406, 405) the N signals (410) for addressing time slots assigned to the secondary data words following each main data word in said incoming and outgoing multiframes.

3. Multipoint digital transmission system according to claim 1 or 2, characterized in that, when a secondary transceiver (S) does not emit data, it emits bits at state one.

4. Multipoint digital transmission system according to claims 2 and 3, characterized in that the means for transmitting to each main transceiver words (P') identical to the data words of the secondary transceiver (S$_k$) in communication with the main transceiver (P) comprise further a register (418) in which the writing of the N successive secondary data words under control of the outgoing multiframe secondary time slot addressing signals (410) is formed by means of a looping through an AND gate (417) so as to obtain the data word of the communicating secondary transceiver (S$_k$) by means of a logic multiplication of the N secondary data words and in which the reading of the data words of the communicating secondary transceiver (S$_k$) is formed through a parallel-to-series converter (419) under the control of the incoming multiframe main time slott addressing signal (408), and in that the means for transmitting to each secondary transceiver (S) data words (S') identical to the data words of the main transceiver (P) comprise further a register (413) in which the writing of the main data words (P) is formed through a series-to-parallel converter (412) under the control of the outgoing multiframe main time slots and in which the reading of the secondary data words (S') is formed by means of a looping under the control of the incoming multiframe secondary time slot addressing signals (410).

5. Multipoint digital transmission system according to any one of the claims 1 to 4, characterized in that the maximum numbers N of the secondary transceivers (S) of the multipoint communications formed by the multipoint units (4) can be different and in that said digital frame (32—33) comprises means for associating each multipoint communication having N secondary transceivers with a multipoint unit (4) forming multipoint communications having at least N secondary transceivers.

6. Multipoint digital transmission system according to any one of claims 1 to 5, characterized in that said number N is less than or equal to fifteen.

**Patentansprüche**

1. Schaltungsanordnung für das zeitmultiplexe numerische Durchschalten von Vielfachverbindungen, wobei bei jeder Vielfachverbindung ein vorrangiges Datenendgerät (P) mehreren nachrangigen Datenendgeräten (S) zugeordnet ist, und wobei das vorrangige Datenendgerät (P) gleichzeitig die gleichen Daten zu den nachrangigen Datenendgeräten (S) überträgt und die nachrangigen Datenendgeräte einzeln und bei Inaktivität der übrigen nachrangigen Datenendgeräte Daten zu dem vorrangigen Datenendgerät übertragen, wobei die Schaltungsanordnung umfaßt:

—erste Multiplexer-Demultiplexer (10), in welchen numerische Zweirichtungskanäle der ersten Ordnung (1) für die Datenübertragung von den vorrangigen und nachrangigen Datenendgeräten mit ersten unterschiedlichen, aber ineinander aufgehenden Bitfolgefrequenzen eine erste Multiplexverschachtelung in numerische Zweirichtungsdatenkanäle der zweiten Ordnung (2) mit einer zweiten Bitfolgefrequenz erfahren, wobei die Bits eines gegebenen Ranges in sich wiederholenden Wörtern des Überrahmens eines Multiplex-Kanals der zweiten Ordnung (2) eine pseudozufällige Folge für die Adressierung der numerischen Kanäle erster Ordnung (1) bilden;

—einen numerischen Verteiler (3), der ein Verbindungsnetzwerk (32) enthält, welches die vorrangigen und nachrangigen Datenwörter eines numerischen Kanals erster Ordnung von einem eingehenden numerischen Kanal zweiter Ordnung in vorbestimmte zeitliche Fenster von numerischen ausgehenden Kanälen der zweiten Ordnung überträgt;

—eine Vielfachverbindungseinheit (4), die Trenneinrichtungen umfaßt, welche die von dem numerischen Verteiler (3) übertragenen Datenwörter von den vorrangigen (P) und nachrangigen (S) Datenendgeräten trennt und zwischen ihnen eine besitmmte Anzahl von Vielfachverbindungen herstellt, sowie Übertragungseinrichtungen umfaßt, die zu jedem vorrangigen Datenendgerät (P) über das Verbindungsnetzwerk (32) Datenwörter (P') übertragen, die identisch sind mit den Datenwörtern des mit dem vorrangigen Datenendgerät (P) verbundenen Datenendgerätes ($S_K$), sowie Übertragungseinrichtungen umfaßt, die zu jedem nachrangigen Datenendgerät (S) über das Verbindungsnetzwerk (32) Datenwörter übertragen, die identisch sind mit den Datenwörtern des vorrangigen Datenendgerätes (P), dadurch gekennzeichnet, daß die Schaltungsanordnung zweite Multiplexer-Demultiplexer (31) umfaßt, in welchen die numerischen Kanäle der zweiten Ordnung (2) eine zweite Multiplexverschachtelung in numerische Zweirichtungs-Datenkanäle der dritten Ordnung (30) mit einer dritten vorbestimmten Bitfolgefrequenz erfahren und mit dem Verbindungsnetzwerk (32) verbunden sind,

—mehrere Vielfacheinheiten (4) umfaßt, deren jede mit einem der Kanäle (30) dritter Ordnung verbunden ist, von welchem sie ein Vielfaches der Bitfolgefrequenz abnimmt, das gleich dem (N+1)fachen der zweiten Bitfolgefrequenz ist, wobei N gleich der maximalen Anzahl der nachrangigen Datenendgeräte ist, die mit einem vorrangigen Datenendgerät über eine durch die Vielfacheinheit hergestellte Vielfachverbindung kommunizieren, und wobei die mit demselben Kanal ($30_i$) dritter Ordnung verbundenen Vielfacheinheiten ($4_{i,j}$) eine vorbestimmte Anzahl J haben, die höchstens gleich der Differenz aus der Anzahl der Kanäle (2) zweiter Ordnung, die in einem Kanal dritter Ordnung verschachtelt werden können, und aus der Summe der maximalen Anzahlen

$$\overset{J}{(\underset{j=1}{\Sigma} N_{i,j})}$$

von nachrangigen Datenendgeräten der durch die Vielfacheinheiten ($4_{i,j}$) hergestellten Vielfachverbindungen ist;

—daß die auf eine Vielfacheinheit ($4_{i,j}$) bezüglichen vorrangigen und nachrangigen Datenwörter mit Datenwörtern für Punkt-zu-Punkt-Verbindungen und für Vielfachverbindungen der übrigen mit dem Kanal dritter Ordnung ($30_i$) verbundenen Vielfacheinheiten verschachtelt werden, sowie durch einen Überrahmen des Kanals dritter Ordnung, in welchem den relativ zu der Vielfacheinheit vorrangigen Datenwörtern zeitliche Fenster (P, P') mit vorbestimmter Lage und einer Wiederholungsfrequenz zugewiesen sind, welche gleich denjenigen der Wörter in den Kanälen zweiter Ordnung (2) ist, wobei jedem Fenster solche folgen, die die N nachrangigen Datenwörter der zugehörigen Vielfachverbindung enthalten können, und wobei die vorbestimmte Lage durch ein Adressensignal (405, 406) des zweiten Multiplexers-Demultiplexers (30) ausgewählt wird, mit welchem der dritte Kanal dritter Ordnung ($30_i$) verbunden ist.

2. Schaltungsanordnung für das Durchschalten von numerischen Vielfachverbindungen nach Anspruch 1, dadurch gekennzeichnet, daß die Trenneinrichtungen für die Datenwörter der vorrangigen und nachrangigen Datenendgeräte (P bzw. S), die durch eine Multiplexverschachtelung von (N+1) multipliziert mit der zweiten Bitfolgefrequenz übertragen werden, einen Taktgeber (407) umfassen, der von dem zweiten zugeordneter Multiplexer-Demultiplexer (31) ein Taktsignal (404) mit dem Takt der dritten Bitfolgefrequenz und zwei Adressensignale (406, 405) empfängt, welche die vorrangigen Zeitfenster der vorbestimmten Stellen in dem mit der dritter Bitfolgefrequenz von dem Verbindungsnetzwerk (32) aus- und eingehenden Überrahmen adressieren, und der ferner aus den beiden Adressensignalen (406, 405) die N Adressensignale (410) derjenigen Zeitfenster ableitet, welche den nachrangigen Datenwörtern zugeordnet sind, die jedem vorrangigen Datenwort in den ein- bzw. ausgehender Überrahmen folgen.

3. Schaltungsanordnung für das Durchschalten von numerischen Vielfachverbindungen nach Anspruch 1 oder 2, dadurch gekennzeichnet, daß ein nachrangiges Datenendgerät (S), das keine Datern sendet, Bits in dem Zustand 1 überträgt.

4. Schaltungsanordnung für das Durchschalten von numerischen Vielfachverbindungen nach Anspruch 2 und 3, dadurch gekennzeichnet, daß die Übertragungseinrichtungen, die zu jedem vorrangigen Datenendgerät Wörter (P') übertragen, die identisch sind mit den Datenwörtern des in Austausch mit dem vorrangigen Datenendgerät (P) stehenden Datenendgerät ($S_K$), außerdem ein Register (418) umfassen, in welchem das Einschreiben der N nachrangigen aufeinanderfolgenden Datenwörter (S) unter der Steuerung der Adressensignale (410) der nachrangigen Zeitfenster des ausgehenden Überrahmens durch eine Schleife über ein UND-Gatter (417) ausgeführt wird, um durch die logische Multiplikation der N nachrangigen Datenwörter das Datenwort des im Austausch stehenden nachrangigen Datenendgerätes ($S_K$) zu erhalten, und in welchem das Auslesen der Datenwörter des in Austausch stehenden nachrangigen Datenendgerätes ($S_K$) über einen Parallel-Serienumsetzer (419) unter Steuerung durch das Adressensignal (408) der vorrangigen Zeitfenster des eingehenden Überrahmens erfolgt, ferner dadurch gekennzeichnet, daß die Übertragungseinrichtungen, die zu jedem nachrangigen Datenendgerät (S) solche Datenwörter (S') übertragen, die mit den Datenwörtern des vorrangigen Datenendgerätes (P) identisch sind, ferner ein Register (413) umfassen, in welches das Einschreiben der vorrangigen Datenwörter (P) über einen Serien-Parallel-Umsetzer (412) unter Steuerung durch die vorrangigen Zeitfenster des ausgehenden Überrahmens erfolgt und aus welchem das Auslesen der nachrangigen Datenwörter (S') über eine Schleife unter Steuerung durch die Adressensignale (410) der nachrangigen Zeitfenster des eingehenden Überrahmens erfolgt.

5. Schaltungsanordnung für das Durchschalten von numerischen Vielfachverbindungen nach einem der Ansprüche 1 bis 4, dadurch gekennzeichnet, daß die maximale Anzahl (N) der nachrangigen Datenendgeräte (S) in den durch die Vielfacheinheiten (4) erzeugten Vielfachverbindungen unterschiedlich sein kann, und dadurch, daß der numerische Verteiler (32—33) Verbindungseinrichtungen umfaßt, die jede Vielfachverbindung mit N nachrangigen Datenendgeräten mit einer Vielfacheinheit (4) verbinden, wodurch Vielfachverbindungen mit mindestens N nachrangigen Datenendgeräten hergestellt werden.

6. Schaltungsanordnung für das Durchschalten von numerisschen Vielfachverbindungen nach einem der Ansprüche 1 bis 5, dadurch gekennzeichnet, daß die Anzahl N kleiner oder gleich 15 ist.

FIG.1

FIG.2

MULTITRAME SORTANTE DU RESEAU DE CONNEXIONS

0 003 706

# FIG.3

Ecriture octets principaux P
lecture octets secondaires sélectionnés $S_k = P'$

407

408

402

410

Lecture octets secondaires $P = S'_1$ à $S'_N$
Ecriture octets secondaires $S_1$ à $S_N$

403

$S_1$ à $S_N$

417

418

REGISTRE BOUCLÉ

0 003 706

adresse P
adresse P'

8kHz

405

406

404

1,024 MHz

401

407

BASE DE TEMPS

RA1

de 31

P et $S_1$ a $S_N$

de vers 32

$(N+1) \times 64\,kb/s$

P' et $S'_1$ à $S'_N$

P

412  CONVERTISSEUR SERIE-PARALLÉLE

8fils

$S_k$ sélectionnés  8fils

419  CONVERTISSEUR PARALLÉLE-SERIE

411

413  REGISTRE BOUCLÉ

409

P

$S'_1$ à $S'_N = P$

414

$P' = S_k$

416